Europäisches Patentamt

European Patent Office

Office européen des brevets

(11) Veröffentlichungsnummer: **0 149 690**

A1

(12) **EUROPÄISCHE PATENTANMELDUNG**

(21) Anmeldenummer. 84100469.0

(22) Anmeldetag: 18.01.84

(51) Int. Cl.⁴: **G 01 C 15/00**
**G 01 C 7/06**

(43) Veröffentlichungstag der Anmeldung:
**31.07.85** Patentblatt **85/31**

(84) Benannte Vertragsstaaten:
**AT BE CH DE FR GB IT LI LU NL SE**

(71) Anmelder: **ALPHA TECHNOLOGIES LTD.**
**7033 Antrim Avenue**
**Burnaby, B.C. V5J 4M5(CA)**

(72) Erfinder: **Zeilinger, Wolfgang**
**Christian Wildnerstrasse 34**
**85 Nürnberg(DE)**

(74) Vertreter: **Göbel, Matthias, Dipl.-Ing.**
**Pruppacher Hauptstrasse 5-7**
**D-8501 Pyrbaum-Pruppach(DE)**

(54) **Verfahren zum Vermessen und Bestimmen von Raumpunkten.**

(57) Bei einem Verfahren zum kurzfristigen und reproduzierbaren Vermessen und Bestimmen von Raumpunkten in
Rohren, Stollen, Tunnel od. dgl. beliebiger Größe werden
zwei im Abstand mit vorbestimmter konstanter Basislänge
verbundene Bildempfänger (1) mit in der Bildebene außen
mit festem Abstand angeordneten Gebern (4) entlang der
Rohre, Stollen oder Tunnel gemeinsam gleichzeitig um
Basislängenintervalle längsbewegt und positioniert und in
den Intervallpositionen werden die Geber des vorderen
Bildempfängers auf der Bildebene (8) des hinteren Bildempfängers abgebildet. Weiter bestimmen die Streckenabstände
sowie die Lage der Abbildungen zu auf der Bildebene
ausgebildeten senkrechten und/oder waagrechten Koordinaten eine Raumkurve nach Höhe und/oder Seite.

*Fig. 1*

EP 0 149 690 A1

DIPL.-ING., **M. GÖBEL**
PATENTANWALT

8501 PYRBAUM-PRUPPACH
PRUPPACHEN HAUPTSTRASSE 17
TELEFON 09180/675
TELEGRAMM GOEPATENT PY **0449690**
TELEX 624407 GOEPA

BANKKONTEN
VOLKSBANK NÜRNBERG 45233 BLZ 76090000
COMMERZBANK NÜRNBERG 6300907 BLZ 76040061

ALPHA TECHNOLOGIES LTD., Burnaby, Kanada

Verfahren zum Vermessen und Bestimmen von Raumpunkten

Die Erfindung betrifft ein Verfahren zum Vermessen und Bestimmen von Raumpunkten in Rohren, Stollen, Tunnel od. dgl.

Der Verlauf von Tunnel, Stollen oder anderweitig beliebigen Rohrzügen ist in bekannter Weise durch Aufzeichnung eines Polygonzuges bestimmbar. Für die Erstellung des Polygonzuges kommen Theodoliten zum Einsatz, die Winkelmessungen zwischen Zielmarkierungen durchführen, wobei ermittelte Winkelunterschiede in Verbindung mit den jeweiligen Abständen der Zielmarkierungen für die Aufzeichnung des Polygonzuges genutzt werden. Bei diesen Vermessungsverfahren sind als Nachteil manuelle Handhabungen von als Zielmarkierungen dienenden Bildtafeln sowie häufige Nachregelungen des Theodoliten erforderlich. Außerdem sind die Vermessungsverfahren in Rohrzügen mit kleinen Durchmessergrößen entweder nur schwierig oder überhaupt nicht anwendbar.

Es ist Aufgabe der Erfindung Maßnahmen zum kurzfristigen reproduzierbaren Vermessen von Raumkurven in beliebigen Rohrzügen zu schaffen.

Diese Aufgabe wird erfindungsgemäß dadurch gelöst, daß zwei im Abstand mit vorbestimmter konstanter Basislänge verbundene Bildempfänger mit in der Bildebene außen mit festem Abstand angeordneten Gebern entlang der Rohre, Stollen oder Tunnel gemeinsam gleichzeitig um Basislängenintervalle längsbewegt und positioniert werden und daß in den Intervallpositionen die Geber des vorderen Bildempfängers auf der Bildebene des hinteren Bildempfängers abgebildet werden und die Streckenabstände sowie Lage der Abbildungen zu auf der Bildebene ausgebildeten senkrechten und/oder waagrechten Koordinaten eine Raumkurve nach Höhe und/oder Seite bestimmen.

Bevorzugt werden dabei die Bildempfänger mit den Gebern entlang der senkrechten Mittellängsebene der Rohre, Stollen oder Tunnel um Basislängenintervalle längsbewegt und positioniert. Es versteht sich, daß die Bildempfänger mit den Gebern auch in einer zur senkrechten Mittellängsebene parallelen Ebene in den Rohrzügen längsbeweg- und positionierbar sind. Die Verfahrensschritte ergeben beim schrittweisen Abfahren der Intervallpositionen auf der hinteren Bildebene unterschiedlich plazierte Abbildungen, die zur Bestimmung und Vermessung des Bogenverlaufs der Rohre, Stollen und Tunnel ausgewertet werden. Die Fahr- und Positionsbewegungen werden dabei nicht durch Bedienungspersonal beeinträchtigt. Außerdem können die Meßwerte an eine Datenverarbeitungsanlage gegeben und gespeichert werden. Die konstanten Basislängen bilden schließlich die Voraussetzung zu einer besonders einfachen Bestimmung der Raumpunkte. Das Verfahren sieht weiter optische Bildempfänger und lichterzeugende Geber vor. Zweckmäßig können als Bildempfänger Kameras oder Bildsensoren mit Optik und elektronischer Auswertung der Geberbilder verwendet werden. Es besteht auch die Möglichkeit die Geberbilder an einem optischen Empfänger mit in der Bild—ebene angeordneten Empfangsstreifen auszuwerten. Schließlich ist auch die Verwendung von Positionssensoren als Bildempfänger möglich.

Bei einer geeigneten Vorrichtung zur Durchführung des Verfahrens sind die beiden Bildempfänger mit den Gebern auf durch starre oder flexible Mittel mit konstantem Basislängenabstand verbundenen unabhängigen Fahrgestellen angeordnet und mittels der Fahrgestelle auf Schienen, an Tragseilen oder auf der Rohrrinnenwand gemeinsam gleichzeitig um Basislängenintervalle im Rohrstrang längsbewegbar und in den Intervallpositionen fixierbar. Bei der dieser Art gebildeten Vorrichtung benötigt vorteilhaft nur ein Fahrgestell einen Antrieb. Darüber hinaus ist auch möglich, die beiden Bildempfänger mit ihren jeweils zugeordneten Gebern auf unabhängigen Fahrgestellen anzuordnen, die jeweils mittels eigener Antriebsmotore um Basislängenintervalle auf Schienen, an Tragseilen oder auf der Rohrinnenwand längsbewegt- und in den Intervallpositionen fixierbar sind. Zur Kennzeichnung der Intervallpositionen können die Schienen und Tragseile oder die Rohrrinnenwand Markierungen aufweisen, wobei die Markierungen auch zum selbsttätigen Anhalten der Fahrgestelle genutzt werden können. Ferner ist möglich die Intervallpositionen mittels der Fahrwerksantriebe oder durch Entfernungsmesser zu bestimmen. In Ausgestaltung der Vorrichtung können die Geber verschieden ausgestaltet sein. So besteht die Möglichkeit Geber zur Erzeugung von moduliertem bzw. monochramatischem Licht in Anwendung zu bringen. Auch sind Geber mit Infrarotlicht verwendbar, wobei hierzu gegebenenfalls Dioden (LED) zum Einsatz kommen können. Letztlich besteht noch die Möglichkeit Geber mit stark gebündeltem Licht (Laserlicht) zu verwenden. Außerdem sieht die Erfindung noch vor, den vorderen Bildempfänger und die diesen zugeordneten Geber durch zwei im Abstand angeordnete Lichtquellen zu bilden, die um ein Basislängenintervall vor dem hinteren Bildempfänger mit konstantem Abstand angeordnet und gemeinsam gleichzeitig mit diesem um Basislängenintervalle in Rohrzügen längsbewegbar und in den Intervallpositionen stellbar sind. Darüber hinaus ist denkbar, gleichzeitig mehr als zwei Bildempfänger mit Gebern in den Rohrzügen um Basislängenintervalle längszubewegen und zu positionieren sowie die Abbildungen auf die jeweils nachfolgenden Bildempfänger zu Meßzwecken zu verwerten.

Außerdem ist zum Vermessen von durch Rohrabschnitten gebildeten Rohrzügen, insbesondere mit nichtbegehbaren Querschnitten vorgesehen, die Bildempfänger mit ihren Gebern in den Rohrabschnitten mit vorbestimmten konstanten Basislängenab-stand fest anzuordnen und daß beim Vortrieb der Rohrabschnitte die Bildempfänger und Geber gemeinsam gleichzeitig mit den Rohrabschnitten ortsveränderlich sind. Bevorzugt kann den Bildempfängern und den Gebern ein, z.B. in der Baugrube angeordneter Bildempfänger zugeordnet sein, der dort ortsfest oder verstellbar installiert ist. In Fortbildung der Erfindung besteht die Möglichkeit Bildempfänger mit ihren Gebern fest mit vorbestimmten konstanten Basislängen an den Rohrabschnitten und dem Vortriebsschild anzuordnen. Die Empfänger können über Kabelverbindungen ihre Meßwerte einfach an eine Datenverarbeitungsanlage liefern.

Das Verfahren ist in der Zeichnung an Ausführungsbeispielen verdeutlicht. Es zeigen:

0

Figur 1 — eine Vorrichtung zur Durchführung des Verfahrens in Seitenansicht,

Figur 2 — eine Vorrichtung in Draufsicht,

Figur 3 — eine Vorrichtung in Draufsicht in einer Arbeitsstellung,

Figur 4 — verschiedene Verfahrensschritte in schematischer Darstellung,

Figuren 5 bis 8 — mehrere Empfängerebenen mit Geberabbildungen

Figur 9 — eine Vorrichtung in abgewandelter Ausbildung in Seitenansicht und

Figur 10 — eine Vorrichtung der Figur 9 in Draufsicht.

In den Figuren sind mit 1 als Bildempfänger dienende Kameras bezeichnet, die auf Fahrgestellen 2 fest aufgebracht sind. Die Fahrgestelle 2 sind, z.B. durch eine angelenkte Stange 3 mit konstantem, jedoch vorbestimmten Abstand (Basislänge) verbunden. Die Fahrgestelle 2 sind auf Schienen 4 in den zu vermessenden Rohrzügen um Basislängenintervalle längsbewegbar und in den Intervallpositionen fixierbar. Zweckmäßig sind die Schienen 4 entlang der Längsmittelebene der Rohrzüge verlegt. Die Kameras 1 tragen im Bereich der Bildebene 8 außen als Geber wirkende Lichtquellen 5, die durch Spiegel 6 hinterfaßt sein können. Mit 7 ist die Optik der Kameras 1 bezeichnet, über die die von den jeweils vorderen Lichtquellen 5 erzeugte Lichtstrahlung auf die Bildebene 8 der rückwärtigen Kamera gelangt.

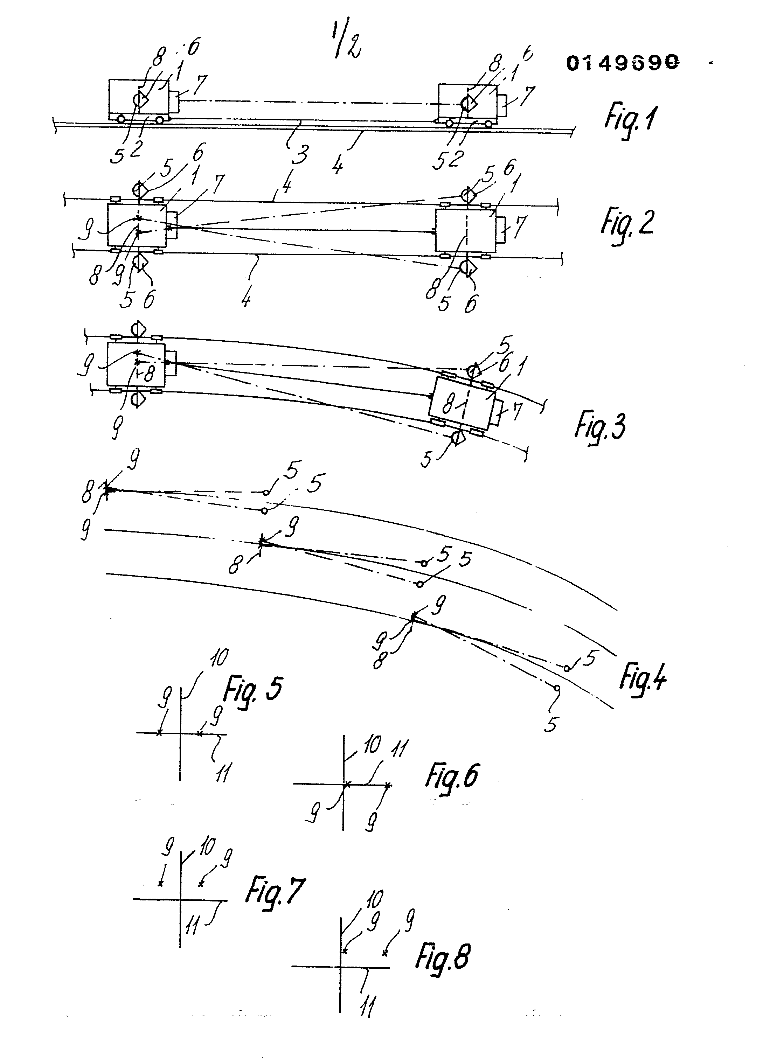

In den Fig. 1 und 2 stehen die beiden Kameras 1 axial waagrecht hintereinander, was auf der Bildebene 8 zu Empfängerbilder 9 mit gleichen Abständen zur senkrechten Koordinate 10 auf der waagrechten Koordinate 11 führt (Fig. 5). Der Benutzer erkennt, daß der Rohrzug gerade verläuft.

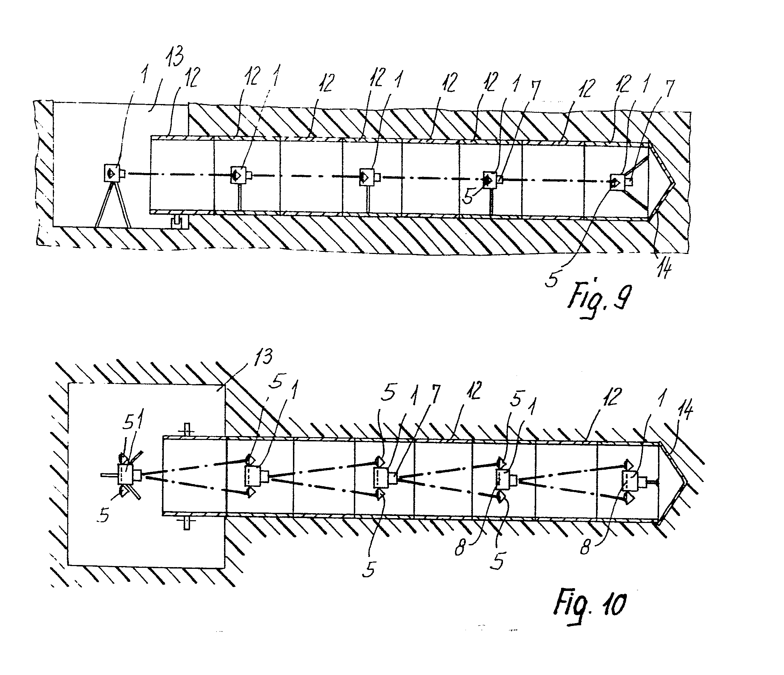

Gemäß der Fig. 3 befinden sich die Bildempfänger 1 in einem gekrümmten Rohrzug. Die Lichtquellen 5 bilden sich auf der Bildebene 8 der rückwärtigen Kamera 1, wie in Fig. 6 gezeigt, als versetzte Empfängerbilder 9 ab. Die Abstände der Empfängerbilder 9 zur senkrechten Koordinate 10 sind Maßstab zur Bestimmung der seitlichen Krümmung des Rohrzuges. Bei weiterem Längsbewegen der durch die Fahrgestelle 2 getragenen Kameras 1 um ein Basislängenintervall nehmen diese die in Fig. 4 mittig gezeigte Stellung ein. Die abgebildeten Empfängerbilder 9 geben bezogen auf die senkrechte Koordinate 10 wiederum die seitliche Versetzung für dieses Teilstück des Rohrzuges an. Durch weiteres Längsbewegen der Fahrgestelle 2 um ein Basislängenintervall nehmen die Kameras 1 die rechte Stellung der Fig. 4 ein. Die Lichtstrahlen geben auch in dieser Stellung Abbildungen auf der Bildebene 8 der rückwärtigen Kamera, die als Maßstab zur Bestimmung der Krümmung dieses weiteren Rohrzugsabschnitts ausgewertet werden können.

In Fig. 7 befinden sich die Empfängerbilder 9 symmetrisch zur senkrechten Koordinate 10 jedoch oberhalb der waagrechten Koordinate 11, das bedeutet, daß der zu bestimmende Rohrzugabschnitt gegenüber der Waagrechten abweicht.

In Fig. 8 sind die Empfängerbilder oberhalb der waagrechten Koordinate 11 und zur senkrechten Koordinate 10 seitlich versetzt.Die Auswertung ergibt, daß der betreffende Rohrzugabschnitt in der waagrechten und in der senkrechten Ebene gekrümmt ist.

Die Fig. 9 und 10 zeigen durch aneinandergefügte Rohrabschnitte 12 gebildete Rohrzüge, die von einer Baugrube 13 aus gemeinsam vortreibbar sind. Den Rohrabschnitten 12 ist ein Vortriebsschild 14 bekannter Weise vorgestellt. In den Rohrabschnitten 12 sind mit vorbestimmten Basislängenabständen Bildempfänger 1 mit Gebern 5 fest angeordnet. Beim Ausführungsbeispiel trägt der Vortriebsschild fest einen weiteren Bildempfänger mit Gebern und in der Baugrube 13 ist ein Bildempfänger mit Gebern installiert. Die Bildempfänger stehen über Kabel mit einer Einrichtung zur Auswertung der Meßbilder in Verbindung. Es v-ersteht sich, den Vortriebsschild nur mit Gebern auszurüsten und in der Baugrube einen Empfänger ohne Geber vorzusehen.

Patentansprüche:

1. Verfahren zum Vermessen und Bestimmen von Raumpunkten in Rohren, Stollen, Tunnel od.dgl., dadurch gekennzeichnet, daß zwei im Abstand mit vorbestimmter konstanter Basislänge verbundene Bildempfänger mit in der Bildebene außen mit festem Abstand angeordneten Gebern entlang der Rohre, Stollen oder Tunnel gemeinsam gleichzeitig um Basislängenintervalle längsbewegt und positioniert werden und daß in den Intervallpositionen die Geber des vorderen Bildempfängers auf der Bildebene des hinteren Bildempfängers abgebildet werden und die Streckenabstände sowie die Lage der Abbildungen zu auf der Bildebene ausgebildeten senkrechten und/oder waagrechten Koordinate, eine Raumkurve nach Höhe und/oder Seite bestimmen.

2. Verfahren nach Anspruch 1, dadurch gekennzeichnet, daß die Bildempfänger mit den Gebern entlang der senkrechten Mittellängsebene der Rohre, Stollen oder Tunnel um Basislängenintervalle längsbewegt und positioniert werden.

3. Verfahren nach Anspruch 1, dadurch gekennzeichnet, daß die Bildempfänger mit den Gebern in einer zur senkrechten Mittellängsebene parallelen Ebene um Basislängenintervalle in den Rohren, Stollen oder Tunnel längsbewegt und positioniert werden.

4. Verfahren nach Anspruch 1, dadurch gekennzeichnet, daß optische Bildempfänger und lichterzeugende Geber verwendet werden.

5. Verfahren nach Anspruch 1, dadurch gekennzeichnet, daß als Bildempfänger Bildsensoren mit Optik und elektronischer Auswertung der Geberbilder verwendet werden.

6. Verfahren nach Anspruch 1 und 5, dadurch gekennzeichnet, daß die Geberbilder durch einen optischen Bildempfänger mit in der Bildebene desselben angeordnete Empfangsstreifen ausgewertet werden.

7. Verfahren nach Anspruch 1, gekennzeichnet durch die Verwendung von Positionssensoren als Bildempfänger der Geberbilder.

8. Vorrichtung zur Durchführung des Verfahrens nach Anspruch 1, dadurch gekennzeichnet, daß die beiden Bildempfänger(1)mit den Gebern(5)auf durch starre oder flexible Mittel (3) mit konstantem Basislängenabstand verbundenen Fahrgestellen (2) angeordnet und mittels der Fahrgestelle (2) auf Schienen (4), an Tragseilen oder an der Rohrinnenwand gemeinsam gleichzeitig um Basislängenintervalle im Rohrstrang längsbewegbar und in den Intervallpositionen stellbar sind.

9. Vorrichtung zur Durchführung des Verfahrens nach Anspruch 1, dadurch gekennzeichnet, daß die beiden Bildempfänger (1) mit den Gebern (5) auf Fahrgestellen (2) angeordnet sind, die durch eigene Antriebsmotore um Basislängenintervalle auf Schienen (4), an Tragseilen oder auf der Rohrinnenwand im Rohrstrang längsbewegbar und in den Intervallpositionen stellbar sind.

10. Vorrichtung nach Anspruch 1, 8 und 9, dadurch gekennzeichnet, daß die Intervallpositionen durch an den Schienen (4), Tragseilen oder der Rohrinnenwand ausgebildeten Markierungen bestimmbar sind.

11. Vorrichtung nach Anspruch 1, 8 und 9, dadurch gekennzeichnet, daß die Intervallpositionen mittels der Fahrwerksantriebe bestimmbar sind.

12. Vorrichtung nach Anspruch 1, 8 und 9, dadurch gekennzeichnet, daß die Intervallpositionen durch Entfernungsmesser b estimmbar sind.

13. Vorrichtung nach Anspruch 1 und 4, dadurch gekennzeichnet, daß die Geber (5) zur Erzeugung von moduliertem Licht ausgebildet sind.

14. Vorrichtung nach Anspruch 1 und 4, dadurch gekennzeichnet, daß die Geber (5) monochramatisches Licht abgeben.

15. Vorrichtung nach Anspruch 1 und 4, gekennzeichnet durch die Anordnung von Infrarotlicht erzeugenden Gebern (5),

16. Vorrichtung nach Anspruch 1 und 4, dadurch gekennzeichnet, daß die Geber (5) stark gebündeltes Licht (Laserlicht) erzeugen.

17. Vorrichtung nach Anspruch 1 und 15, dadurch gekennzeichnet, daß die Geber (5) durch Dioden (LED) gebildet sind.

18. Vorrichtung nach Anspruch 1, dadurch gekennzeichnet, daß der vordere Bildempfänger (1) und die diesem zugeordneten Geber (5) durch zwei im Abstand angeordnete Lichtquellen ersetzt sind, die um ein Basislängenintervall vor dem hinteren Bildempfänger (1) mit konstantem Abstand angeordnet und gemeinsam gleichzeitig mit diesem um Basislängenintervalle in Rohrzügen längsbewegbar und in den Intervallpositionen stellbar sind.

19. Vorrichtung nach Anspruch 1, dadurch gekennzeichnet, daß die Bildempfänger mit ihren Gebern in durch vortreibbare Rohrabschnitte gebildeten Rohrzügen in den Rohrabschnitten mit vorbestimmten konstanten Basislängenabstand fest angeordnet sind und daß beim Vortrieb der Rohrabschnitte die Bildempfänger und Geber gemeinsam gleichzeitig mit den Rohrabschnitten ortsveränderlich sind.

20. Vorrichtung nach Anspruch 19, dadurch gekennzeichnet, daß die Bildempfänger mit ihren Gebern in durch vortreibbaren Rohrabschnitten gebildeten Rohrzügen in den Rohrzügen mit vorbestimmten konstanten Basislängenabstand fest sowie ein Bildempfänger in der Baugrube ortsfest bzw. verstellbar angeordnet sind.

21. Vorrichtung nach Anspruch 19, dadurch gekennzeichnet, daß die Bildempfänger mit ihren Gebern fest mit vorbestimmten konstanten Basislängen an den Rohrabschnitten und dem Vortriebsschild angeordnet sind.

1/2

0149690

Fig.1

Fig.2

Fig.3

Fig.4

Fig.5

Fig.6

Fig.7

Fig.8

Fig. 9

Fig. 10

**0149690**

Nummer der Anmeldung

EP  84 10 0469

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-2 101 742  (ZUBLIN)<br><br>* Seite 2, Zeile 86 - Seite 3, Zeile 60 *<br><br>--- | 1-5,8, 17,19-21 | G 01 C  15/00<br>G 01 C   7/06 |
| A | CH-A-  491 246  (MINISTERIUM FÜR VERKEHRSWESEN)<br><br>--- | | |
| A | FR-A-2 073 075  (PLASSER)<br><br>----- | | |

| RECHERCHIERTE SACHGEBIETE (Int. Cl. ³) |
|---|
| G 01 C<br>G 01 B<br>E 21 D<br>E 01 B |

Der vorliegende Recherchenbericht wurde für alle Patentansprüche erstellt.

| Recherchenort | Abschlußdatum der Recherche | Prüfer |
|---|---|---|
| DEN HAAG | 20-09-1984 | DE BUYZER H.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

............................................................

& : Mitglied der gleichen Patentfamilie, übereinstimmendes Dokument

EPA Form 1503. 03.82